# EUROPÄISCHE PATENTANMELDUNG

(11) **EP 0 828 059 A1**
(43) Veröffentlichungstag der Anmeldung: **11.03.1998**
(21) Anmeldenummer: 97115076.8
(22) Anmeldetag: 30.08.1997
(51) Int. Cl.: F01K 23/06, F02G 5/04

(54) **Anlage zur kombinierten Erzeugung von mechanischer Antriebsenergie und Dampf mittels flüssigkeitsgekühlter Verbrennungsmotoren**

(30) Priorität: 05.09.1996 DE 19636057
(71) Anmelder: Bauer, Lothar, 94051 Hauzenberg (DE)
(72) Erfinder: Bauer, Lothar, 94051 Hauzenberg (DE)

(57) **Zusammenfassung**

Bei derartigen Anlagen wird in einer vom Kühlmittel beheizten Dampferzeugereinheit Dampf auf einem entsprechend niedrigen Druckniveau generiert, anschließend durch einen mittels Hochdruckdampf angetriebenen Dampfstrahlkompressor auf ein höheres Druckniveau verdichtet, als es der Kühlmitteltemperatur entspricht, und Dampfverbrauchern zugeführt. Die Motorabgase werden ebenfalls zur Dampferzeugung, vorzugsweise für Hochdruckdampf genutzt. Dabei gewährleisten Regeleinrichtungen bei allen Lastzuständen des Motors **1** und bei gleichzeitig stark schwarkendem Dampfbedarf unter bestmöglicher Ausnutzung der Motorabwärme einen stabilen Betrieb der Anlage, eine zuverlässige Versorgung der Dampfverbraucher sowie die Einhaltung eines vorgeschriebenen Versorgungsdrucks. Zur Regelung des Mindestsaugdrucks wird die Saugdampfmenge mit Dampf höheren Drucks oder durch anderweitige Beheizung der kühlmittelbeheizten Dampferzeugereinheit angehoben. Zur Einhaltung des maximalen Gegendrucks wird mittels einer verstellbaren Düsennadel die Treibdampfmenge des Dampfstrahlkompressors reduziert und zur Begrenzung der Kühlmitteltemperatur wird überschüssige Kühlmittelwärme abgeführt. Zu geringen Gemischdampfmengen wird entsprechend dem Dampfbedarf Dampf höheren Drucks zudosiert. Die Anlage dient der rationellen Energieerzeugung in Kraft-Wärme-Kopplung. Sie tritt in Konkurrenz zur Gasturbine.

## Beschreibung

Die Erfindung betrifft eine Anlage zur kombinierten Erzeugung von mechanischer Antriebsenergie und Dampf mittels flüssigkeitsgekühlter Verbrennungsmotoren **1** nach dem Oberbegriff des Anspruchs 1. Dabei kann die erzeugte mechanische Antriebsenergie ganz oder teilweise in eine andere Energieform, vorzugsweise in Elektrizität umgewandelt werden. Das grundlegende Wirkprinzip derartiger Kraft-Wärme-Kopplungs-Anlagen ist ein Wärmepumpenprozeß, wobei unter Ausnutzung der mittels Kühlmittel abgeführten Motorabwärme Dampf auf einem entsprechend niedrigen Druck- und Temperaturniveau erzeugt wird, und wobei dieser Dampf mittels wenigstens eines Dampfstrahlkompressors **11** verdichtet wird, wodurch Dampf auf einem höhere Druck- und Temperaturniveau zur Nutzung in technischen Prozessen oder zu Heizzwecken bereitgestellt werden kann. Der so erzeugte Dampf kann in ein Dampfnetz eingespeist werden, oder er kann mittels eines Kondensators seine Kondensationswärme an ein Wärmenetz oder einen Wärmespeicher auf einem höheren Temperaturniveau abgeben, als dies bei einer rekuperativen Wärmeübertragung vom Kühlmittel an ein zu beheizendes Medium möglich ist. Der zum Antrieb des Dampfstrahlkompressors **11** erforderliche Treibdampf wird einer Hochdruckdampfschiene **22** entnommen, die eine ausreichend ergiebige Dampfquelle verkörpert, welche teilweise oder ausschließlich von einer oder mehreren ersten abgasbeheizten Dampferzeugereinheiten **15** gespeist werden kann, die aber ebensogut teilweise oder ausschließlich von nicht näher bezeichneten Dampferzeugern gespeist werden kann, insbesondere dann, wenn erste abgasbeheizte Dampferzeugereinheiten **15** unmittelbar in eine Verbraucherdampfschiene **23** einspeisen. Bei ausreichendem Restsauerstoffgehalt der Abgase kann außerdem zwischen den Motoren **1** und den ersten abgasbeheizten Dampferzeugereinheiten **15** eine Zusatzfeuerung eingeschaltet werden.

Dabei kann es aufgrund der Energiebilanzen und der Temperaturniveaus der Kühlkreisläufe verfügbarer Motoren sowie der Kennlinien von Dampfstrahlkompressoren je nach Anwendungsfall sinnvoll sein, die in einem oder in mehreren Kühlkreisläufen anfallende Wärme gemeinsam oder getrennt, ganz oder nur teilweise mittels des obigen Wärmepumpenprozesses auf einem oder mehreren höheren Temperaturniveaus bereitzustellen, als es der Temperatur des jeweiligen Kühlkreislaufs entspricht. Wird z. B. bei einer Anlage zur Erzeugung von Elektrizität und Dampf ein relativ hoher Dampfdruck bei gleichzeitig hoher Stromkennzahl gefordert, so kann es vorteilhaft sein, bei Motoren mit mehreren Kühlkreisläufen, welche unterschiedliche Temperaturniveaus aufweisen, lediglich die Wärme derjenigen Kühlkreisläufe mit der höchsten Temperatur zur Dampferzeugung zu nutzen, um die zum Antrieb des Dampfstrahlkompressors **11** benötigte Treibdampfmenge, und somit auch die bereitgestellte Gemischdampfmenge, in Grenzen zu halten. Dabei kann die in den übrigen Kühlkreisläufen auf ausreichend hohem Temperaturniveau anfallende Wärme ganzjährig als Prozeßwärme oder während der Heizperiode zur Raumheizung genutzt werden. Soll andererseits ein Wärmeträgermedium aus dem Rücklauf eines Wärmenetzes auf die Vorlauftemperatur erwärmt werden, so kann es bei Vorhandensein mehrerer Kühlkreisläufe auf unterschiedlichen Temperaturniveaus sinnvoll sein, die Wärme der Kühlkreisläufe mit ausreichend hoher Temperatur rekuperativ in das Wärmenetz einzukoppeln, während die auf einem niedrigeren Temperaturniveau anfallende Wärme der übrigen Kühlkreisläufe mittels des obigen Wärmepumpenprozesses und eines Kondensators dem Wärmenetz zugeführt wird. Liegt einer Aufgabenstellung ein hoher Dampfbedarf bei mäßigem Dampfdruck und bei gleichzeitig niedrigem Bedarf an mechanischer Antriebsenergie zugrunde, so kann man unter Inkaufnahme größerer Treibdampfmengen die gesamte, in den Kühlkreisläufen der vorgesehenen Motoren **1** anfallende Wärme auf einem höheren Druckniveau, als es der maximalen Kühlwassertemperatur entspricht, zur Dampferzeugung nutzen.

Es ist bekannt, daß in **DE-PS 31 23 474 C2** eine Anlage dieser Gattung zur Nutzung von auf einem niedrigeren und auf einem höheren Temperaturniveau anfallenden Abwärme von Brennkraftmaschinen in einem Wärmeverbraucher vorgeschlagen wurde. Kennzeichnend für eine derartige Anlage ist, daß die Dampferzeugung im Niederdruckkreislauf nach dem Prinzip der Entspannungsverdampfung abläuft, wobei die Wärmezufuhr an das zu verdampfende Wasser mittels in die Kühlkreisläufe der Motoren eingeschalteter Wärmeübertrager vorgenommen wird. Darüberhinaus kann eine Verdampfung nach dem Entspannungsprinzip aber auch dadurch realisiert werden, daß das zu verdampfende Wasser direkt dem Kühlmantel des Verbrennungsmotors zugeführt wird, dabei die abzuführende Wärme im Motor selbst aufnimmt, und nach der Entspannung in einem Druckgefäß eine der aufgenommenen Wärmemenge entsprechende Dampfmenge ausscheidet. Eine weitere Möglichkeit zur Erzeugung des vom Dampfstrahlkompressor zu verdichtenden Dampfes besteht darin, Wärmeübertragungsflächen mittels der Wärme aus den Kühlkreisläufen zu beheizen, die den Wasserraum eines Dampfkessels durchziehen.

Soweit eine derartige Anlage unter konstanten Betriebsverhältnissen im Auslegungspunkt betrieben wird, ist eine zuverlässige Versorgung eines Dampfnetzes mit der geforderten Dampfmenge bei einem vorgegebenen Druck oder die Einkopplung einer geforderten Wärmemenge in ein Wärmenetz oder einen Wärmespeicher bei einer vorgegebenen Temperatur sichergestellt.

Die bei weitem größte Anzahl der in der Praxis auftretenden Versorgungsaufgaben zeichnet sich aber dadurch aus, daß vollkommen unabhängig vom schwankenden Bedarf an mechanischer Antriebsenergie auch der Dampfbedarf eines Verbrauchers oder einer Verbrauchergruppe größeren Schwankungen unterliegt, wobei der Versorgungsdruck **p**_{**V**} nur in sehr engen Grenzen von einem vorgegebenen Wert abweichen darf, und die Motorlast vom jeweiligen Bedarf an mechanischer Antriebsenergie bestimmt wird. Für den Dampfstrahlkompressor bedeutet dies, daß er unter erheblichen Abweichungen vom Auslegungspunkt betrieben wird, was zu folgenden Problemen führt:
- sinkt die Dampfabnahme der Verbraucher unter diejenige, die der Auslegung entspricht, so ist das mit einem Druckanstieg in der Versorgungsleitung verbunden. Infolge dieses höheren Gegendrucks **p**_{**D**} wird der Dampfstrahlkompressor auf dem abfallenden Ast der Kennlinie betrieben. Er fördert immer weniger Saugdampf aus dem Niederdruckkreis und deckt den verbleibenden Dampfbedarf zu immer größeren Teilen mit hochwertigem Treibdampf höheren Drucks, der sich häufig anderweitig nutzen läßt oder sogar durch zusätzlichen Brennstoffeinsatz erzeugt werden muß. Außerdem kann der Dampfstrahlkompressor, insbesondere bei höheren Verdichtungsverhältnissen in einen instabilen Betrieb fallen. In besonders ungünstigen Fällen stellt sich auch nach einem Ansteigen der Dampfabnahme ein stabiler Betrieb nicht mehr ein.
- kann der Motor aufgrund der niedrigen Lastanforderung nicht diejenige Kühlmittelwärmemenge je Zeiteinheit bereitstellen, die der Auslegung des Dampfstrahlkompressors entspricht, so kühlt der Niederdruckkreis aus. Dadurch fällt der Saugdruck **p**_{**S**}, und infolgedessen sinkt mit dem relativen Saugstrom nicht nur die Gemischdampfmenge, sondern auch der auf dem waagrechten Ast der Kennlinie des Dampfstrahlkompressors erzielbare Versorgungsdruck **p**_{**V**} unter den geforderten Wert.

Zur Lösung derartiger Probleme sind aber in **DE-PS 31 23 474 C2** keine Angaben enthalten.

Weiterhin ist bekannt, daß bei geringerem Dampfbedarf als der vom Dampfstrahlkompressor abgelieferten Dampfmenge ein instabiler Betrieb und eine verringerte Saugmenge **MS** infolge des ansteigenden Gegendrucks **p**_{**D**} durch Kondensieren des überschüssigen Dampfes nach dem Dampfstrahlkompressor in einem parallel zu den Verbrauchern geschalteten Regelkondensator verhindert werden können. Das hat den Nachteil, daß neben dem im kühlmittelbeheizten Dampferzeuger des Niederdruckkreislaufs erzeugten Dampf auch erhebliche Mengen an höher gespanntem, anderweitig verwendbarem und unter Umständen durch zusätzlichen Brennstoffeinsatz erzeugtem Treibdampf ohne jeden Nutzen im Regelkondensator kondensiert werden müssen.

Weiterhin ist bekannt, daß Dampfstrahlkompressoren zur Anpassung an sich ändernde Betriebsbedingungen mit verstellbaren Düsennadeln zur Reduzierung der Treibdampfmenge ausgestattet werden können, wobei zur Verstellung ein Regelkreis oder eine Steuerkette aufgebaut werden kann, deren Eingangssignal z. B. der Saugdruck **p**_{**S**} oder der Gegendruck **p**_{**D**} des Dampfstrahlkompressors sein kann. Eine gleichzeitige Regelung von Saug- und Gegendruck unabhängig voneinander ist jedoch nicht möglich.

Der Erfindung liegt die Aufgabe zugrunde, die oben aufgezeigten Nachteile bekannter Anlagen zu überwinden und aufbauend auf eine Anlage nach **DE-PS 31 23 474 C2**, eine durch selbsttätig regelnde Einrichtungen verbesserte, universell einsetzbare Anlage anzugeben, die es erlaubt, die vorgegebenen Abwärmequellen von Verbrennungsmotoren **1** , nämlich Abgasstrom und die je nach Aufgabenstellung geeigneten Kühlkreisläufe, so in ein Dampfnetz, bestehend aus wenigstens einer Verbraucherdampfschiene **23** mit wenigstens einem Verbraucher **21** aufeinem höheren Druckniveau, als es der maximalen Kühlmitteltemperatur des jeweiligen Kühlkreises entspricht, und wenigstens einer Hochdruckdampfschiene **22** auf einem wesentlich höheren Druckniveau als dem der Verbraucherdampfschiene **23** einzubinden, daß in allen auftretenden Betriebspunkten bei stabilem Betrieb des Dampfstrahlkompressors **11** und bei optimalem Wirkungsgrad eine zuverlässige Versorgung der Dampfverbraucher **21** der jeweiligen Verbraucherdampfschiene **23** in Hinblick auf Dampfabnahmemenge und Versorgungsdruck **p**_{**V**} sichergestellt werden kann.

Diese Aufgabe wird erfindungsgemäß durch eine Anlage nach Patentanspruch 1 gelöst, deren Arbeitsweise und Vorteile im folgenden erläutert werden.

Aufgrund der Tatsache, daß ein Dampfstrahlkompressor **11** nur in seinem Auslegungspunkt optimal arbeitet, ist es vorteilhaft, eine derartige Anlage so auszulegen, daß unter Einhaltung aller vorgegebenen Temperaturen und Drücke der Saugdampfstrom des ungeregelten Dampfstrahlkompressors **11** gerade der Dampfmenge entspricht, die unter vollständiger Ausnutzung der vorgegebenen Abwärme des jeweiligen Kühlkreislaufs bei Vollastbetrieb des Motors **1** in der Dampferzeugereinheit **6,7,4,8** generiert werden kann. Diesem, der Auslegung entsprechenden maximalen Saugdampfstrom **MS**_{**max**} entspricht ein maximaler Gemischdampfstrom **MD**_{**max**} nach der Verdichtung. Wird von einem oder mehreren Verbrauchern **21** gerade die gleiche Dampfmenge abgenommen, die diesem maximalen Gemischdampfstrom entspricht, so kann die Anlage für diesen Betriebspunkt allein mit den bereits bekannten Merkmalen wirtschaftlich und zuverlässig arbeiten.

In allen übrigen, vom Auslegungspunkt abweichenden Betriebspunkten stellt sich der Betrieb einer Anlage nach Anspruch 1 gemaß den kennzeichnenden Merkmalen wie folgt dar:

Überschreitet die Dampfabnahme eines oder mehrerer Verbraucher **21** den maximalen Gemischdampfstrom **MD**_{**max**}**,** so führt dies zu einem Druckabfall in der Verbraucherdampfschiene **23** unter das Druckniveau **p**_{**V**}. Das in Abhängigkeit von diesem Druckabfall arbeitende Regelventil **14** wird von einer Dampfschiene höheren Drucks, vorzugsweise von der Hochdruckdampfschiene **22** versorgt, und arbeitet als Druckregelventil. Dieser Funktion entsprechend wirkt es der Ursache des Druckabfalls entgegen, indem es dem Gemischdampfstrom soviel Dampf aus der entsprechenden Dampfschiene zudosiert, bis die der Verbraucherdampfschiene **23** zuströmende Dampfmenge mit der zu den Verbrauchern **21** abströmenden Dampfmenge im Gleichgewicht ist, und hält somit den Versorgungsdruck **p**_{**V**} oberhalb des zulässigen unteren Grenzwertes. Im einfachsten Fall kann dieses Regelventil **14** ein vom Druck **p**_{**V**} direkt betätigtes Druckregelventil sein. Ist eine bleibende Regelabweichung nicht zulässig, so kann das Regelventil **14** z.B. ein proportional-integral wirkendes Regelverhalten aufweisen.

Unterschreitet die Dampfabnahme der Verbraucher **21** den maximalen Gemischdampfstrom **MD**_{**max**}**,** so hat das einen Anstieg des Versorgungsdrucks **p**_{**V**} zur Folge, der gleichbedeutend ist mit einem Anstieg des Gegendrucks **p**_{**D**} des Dampfstrahlkompressors **11**. Der Dampfstrahlkompressor **11** wurde dadurch auf dem abfallenden Ast seiner Kennlinie betrieben, der sich, wie bereits beschrieben, durch unwirtschaftliche Betriebsweise und, insbesondere bei höheren Verdichtungsverhältnissen, durch instabiles Betriebsverhalten auszeichnet. Dies wird verhindert, indem die Regeleinrichtung **12** in Abhängigkeit vom steigenden Versorgungsdruck **p**_{**V**} und unter Einhaltung des zulässigen Höchstwertes für den Versorgungsdruck **p**_{**V**} die Düsennadel des Dampfstrahlkompressors **11** solange zu kleineren Treibdampfmengen hin verstellt, bis die vom Dampfstrahlkompressor **11** gelieferte Gemischdampfmenge mit der Dampfabnahme der Verbraucher **21** im Gleichgewicht ist. Bedingt durch das Kennlinienfeld des Dampfstrahlkompressors **11** sinkt damit auch der absolute Saugstrom. Bei höherer Wärmezufuhr an die kühlmittelbeheizte Dampferzeugereinheit **6,7,4,8,** als es der Wärmeabfuhr durch den Saugdampfstrom entspricht, steigt somit das Temperaturniveau in der kühlmittelbeheizten Dampferzeugereinheit **6,7,4,8** und damit auch der Druck **p**_{**S**}, und infolgedessen der relative Saugstrom. Das bedeutet, daß die ansonsten schlecht verwertbare Abwärme des Kühlmittels überproportional zur Deckung der nun geringeren Dampfabnahme der Verbraucher **21** herangezogen wird, während sich der Verbrauch an häufig anderweitig nutzbarem, leichter speicherbarem und unter Umständen durch zusätzlichen Brennstoffeinsatz erzeugtem Dampf aus der Hochdruckdampfschiene **22** reduziert. Dabei kann die Regeleinrichtung **12** z. B. eine elektronische Regeleinrichtung sein, die mittels eines Meßumformers den Versorgungsdruck **p**_{**V**} erfaßt, die Regelabweichung bildet, diese entsprechend eines geeigneten Regelalgorithmus verarbeitet, und die Stellgröße an ein mit Hilfsenergie versorgtes, elektrisches oder pneumatisches Stellglied weiterleitet, das die Düsennadel verstellt.

Sinkt die Dampfabnahme noch weiter ab, so steigt das Temperaturniveau in der kühlmittelbeheizten Dampferzeugereinheit **6,7,4,8** noch weiter an, und infolgedessen steigt auch das Temperaturniveau des zugehörigen Kühlkreislaufs. Erreicht dabei eine zu begrenzende Kühlmitteltemperatur den maximal zulässigen Wert, so betätigt eine in Abhängigkeit von der jeweiligen Temperatur arbeitende Regeleinrichtung **2** unter Einhaltung der zulässigen Temperaturobergrenze eine Vorrichtung **3** zur Abfuhr der momentan nicht nutzbaren Wärme aus dem jeweiligen Kühlkreislauf. Die Wärmeabfuhr kann dabei an die Umgebung und/oder an Niedertemperaturverbraucher erfolgen. Die Vorrichtung **3** zur Abfuhr dieser überschüssiger Wärme aus dem Kühlkreislauf kann ein eingebundener Wärmeübertrager sein, der die abzuführende Wärme primärseitig direkt vom Kühlmittel, oder von umgewälztem Wasser aus der kühlmittelbeheizten Dampferzeugereinheit **6,7,4,8,** oder durch Kondensation von Dampf aus der kühlmittelbeheizten Dampferzeugereinheit **6,7,4,8** aufnimmt, und sekundärseitig an Niedertemperaturverbraucher, Kühlwasser oder an die Umgebungsluft abgibt. Herrschen in der kühlmittelbeheizten Dampferzeugereinheit **6,7,4,8** zur Erzeugung von Wasserdampf Temperaturen über 100°C und somit Überdruck, so kann diese Vorrichtung **3** aber auch ein von der Regeleinrichtung **2** betätigtes Ventil sein, das entweder an einer geeigneten Stelle, ohne Gefährdung von Mensch und Material, Dampf aus der kühlmittelbeheizten Dampferzeugereinheit **6,7,4,8** in die Umgebung ableitet, oder das Wasser aus der kühlmittelbeheizten Dampferzeugereinheit **6,7,4,8** in ein unter atmosphärischem Druck stehendes Kondensatsystem **29** ableitet, wobei sich das abgeleitete Wasser entspannt, teilweise verdampft und so die gewünschte Kühlwirkung erzielt. Die zur Erzielung der Kühlwirkung aus der kühlmittelbeheizten Dampferzeugereinheit **6,7,4,8** entnommenen Dampf- und Wassermengen sind auf herkömmliche Weise mittels einer Speisepumpe **9** zu ersetzen.

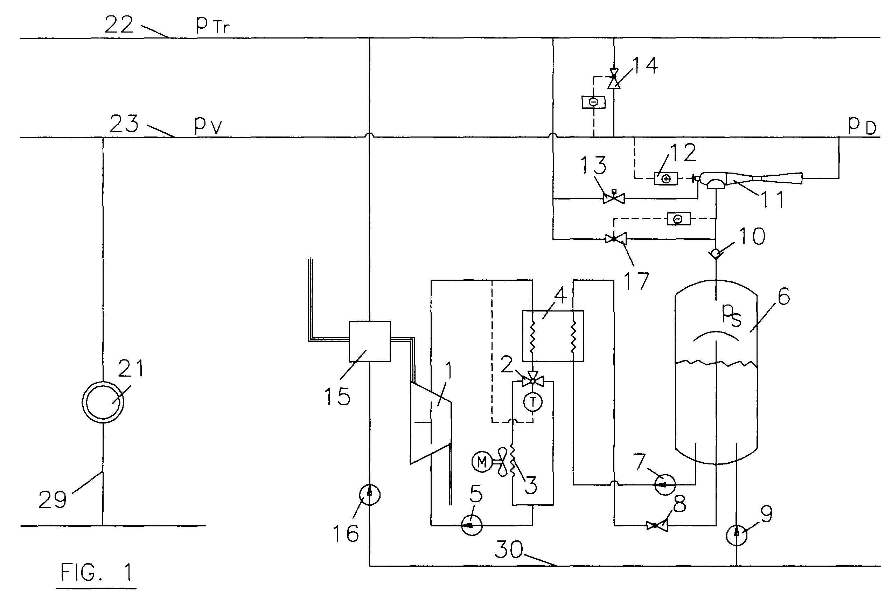

Wird der Motor **1** unter Teillast betrieben, und reicht die im Kühlmittel anfallende Wärme nicht aus, der kühlmittelbeheizten Dampferzeugereinheit **6,7,4,8** in dem Maße Wärme zuzuführen, wie es dem vom Dampfstrahlkompressor **11** bei entsprechend hoher Dampfabnahme der Verbraucher **21** angesaugten Saugdampfstrom entspricht, so fällt das Temperaturniveau und damit auch der Saugdruck **p**_{**S**} in der Dampferzeugereinheit **6,7,4,8**. Das hätte zur Folge, daß der Dampfstrahlkompressor **11** auf dem waagrechten Ast seiner Kennlinie den durch das Regelventil **14** konstant gehaltenen, und zur zuverlässigen Versorgung der Verbraucher **21** erforderlichen Versorgungsdruck **p**_{**V**} nicht mehr erreichen könnte, wodurch sich Betriebspunkte auf dem abfallenden Ast der Kennlinie mit den bereits bekannten Problemen einstellen würden. Das wird im einfachsten Fall durch ein Regelventil **17** verhindert, das entsprechend dem Schaltschema der **Figur 1** als Druckregelventil arbeitet, und so in Abhängigkeit des fallenden Saugdrucks **p**_{**S**} soviel Dampf aus einer Dampfschiene höheren Drucks, vorzugsweise aus der Hochdruckdampfschiene **22** in die Saugleitung des Dampfstrahlkompressors **11** zudosiert, daß dieser Dampf zusammen mit demjenigen aus der kühlmittelbeheizten Dampferzeugereinheit **6,7,4,8** mit dem vom Dampfstrahlkompressor **11** angesaugten Saugdampfstrom im Gleichgewicht ist, und so dem Druckabfall entgegenwirkt. Für das Regelverhalten des Regelventils **17** gelten die gleichen Aussagen wie für das Regelventil **14**. Die gleiche Wirkung läßt sich erzielen, indem man der jeweiligen kühlmittelbeheizten Dampferzeugereinheit **6,7,4,8** eine in Abhängigkeit vom Saugdruck **p**_{**S**} arbeitende Einrichtung zur zusätzlichen, vom Wärmeanfall im zugehörigen Kühlkreislauf unabhängigen Beheizung zuordnet, welche die Dampfmenge soweit steigert, bis sich unter Einhaltung der vorgegebenen Untergrenze für den Saugdruck **p**_{**S**} ein Gleichgewicht zwischen der erzeugten Dampfmenge und der vom Dampfstrahlkompressor **11** angesaugten Dampfmenge einstellt. Heizgeräte, welche unter Verwendung von Dampf aus einer Dampfschiene höheren Drucks arbeiten, werden im Zusammenhang mit den Ausführungsbeispielen näher beschrieben. Wird die mechanische Antriebsleistung dazu benutzt, elektrische Energie zu erzeugen, so kann darüber hinaus auch eine elektrische Zusatzbeheizung in Betracht gezogen werden. Nachdem die geringe Verdampfungsleistung der kühlmittelbeheizten Dampferzeugereinheit **6,7,4,8** eine Folge der geringen Motorlast ist, besteht eine ausreichende Leistungsreserve, um eine elektrische Zusatzheizung zu betreiben. Die Verdampfungsleistung wird dadurch in zweifacher Hinsicht gesteigert, da der Leistungsbedarf für die elektrische Heizung mit einer höheren Motorlast, und infolgedessen mit einem größeren Wärmeanfall im Kühlkreislauf verbunden ist.

Der grundlegende Vorteil dieser Lösung begründet sich damit, daß für eine Anlage nach dem Oberbegriff des Anspruch 1 ein umfassendes Regelkonzept zur Verfügung steht, das es erlaubt, diese bei allen Lastzuständen des Verbrennungsmotors **1** unter gleichzeitiger, den Gemischdampfstrom des Auslegungspunktes unter oder überschreitender Damspfabnahme der angeschlossenen Dampfverbraucher **21** , diese im stabilen Betrieb mit ausreichenden Dampfmengen zu versorgen, und den Versorgungsdruck **p**_{**V**} in den geforderten Grenzen zu halten.

Besonders vorteilhaft wirkt sich dabei aus, daß bei anhaltend geringeren Dampfabnahmemengen, als es der vom Dampfstrahlkompressor **11** abgelieferten Gemischdampfmenge entspricht, kein Regelkondensator notwendig ist, der neben dem mittels der Kühlmittelwärme erzeugten Dampf zusätzlich große Mengen an Treibdampf ohne jede Wärmeausnutzung kondensieren würde. Statt dessen wird über einen weiten Bereich die anderweitig schlecht verwertbare Niedertemperaturwärme der zur Dampferzeugung genutzten Kühlkreisläufe überproportional zur Deckung des nun geringeren Dampfverbrauchs herangezogen, und der Treibdampfbedarf dadurch sogar reduziert, was einer deutlichen Verbesserung des Wirkungsgrades gleichkommt. Das kommt insbesondere bei Auslegungen mit hohen Verdichtungsverhältnissen einer erheblichen Brennstoffeinsparung gleich, da in diesen Fällen die erforderlichen Treibdampfmengen nur teilweise mittels der Abgaswärme des Motors **1** erzeugt werden können. Dieser Vorteil mußte zwar damit erkauft werden, daß die Düsennadelverstellung des Dampfstrahlkompressors **11** nicht mehr zur Regelung des für einen stabilen Betrieb erforderlichen Mindestsaugdrucks zur Verfügung steht, wodurch für diesen Zweck, insbesondere bei höheren Verdichtungsverhälnissen, die Verwendung von Dampf auf einem höheren Druckniveau oder anderweitige Heizwärme erforderlich ist, was sich aber insofern nicht nachteilig auswirkt, daß aufgrund eines zu geringen Wärmeanfalls im Motorkühlmittel ohnehin nur Dampf aus einer Dampfschiene höheren Drucks oder anderweitig erzeugte Wärme zur Deckung des Mehrbedarfs an Dampf in Frage kommt.

Durch die selbsttätige Anpassung an die jeweiligen Betriebsverhältnisse bei bestmöglicher Ausnutzung der vorgegebenen Wärmequellen des Verbrennungsmotors **1** zur Dampferzeugung werden derartige Anlagen universell einsetzbar und erschließen in Verbindung mit der hervorragenden Arbeitsausbeute von Verbrennungsmotoren Einsatzfelder für die Kraft-Wärme-Kopplung, die weder für Motorheizkraftwerke üblicher Bauart noch für Gasturbinen zugänglich sind, da erstere zur Dampferzeugung unter Ausnutzung der Kühlmittelwärme ungeeignet sind, und Gasturbinen im unteren Leistungsbereich entweder nicht verfügbar, oder zu teuer sind, oder zu geringe mechanische Wirkungsgrade bei gleichzeitig schlechtem Teillastverhalten aufweisen.

Bei Anlagen nach Anspruch 2 kann durch den Einsatz von heißgekühlten Motoren **1**, deren Motorkühlmittel Temperaturen zwischen 120°C und 130°C erreicht, das Saugdruckniveau des Dampfstrahlkompressors **11** entsprechend hoch gewählt werden. Das wirkt sich insofern besonders vorteilhaft aus, da mit steigendem Saugdruckniveau höhere Versorgungsdrücke bei gleichzeitig geringerem Treibdampfbedarferzielbar sind. Die Einsatzmöglichkeiten lassen sich somit erheblich in Richtung höhere Versorgungsdrucke und/oder hin zu höherer Arbeitsausbeute bei gegebenem Wärmebedarfspotential erweitern.

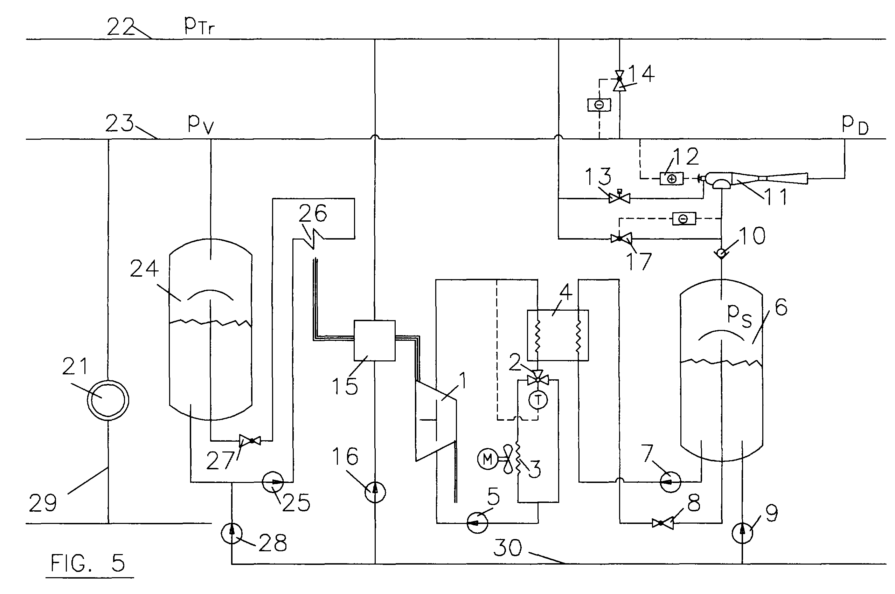

Wird der Dampf von der ersten abgasbeheizten Dampferzeugereinheit **15** in die Hochdruckdampfschiene **22** eingespeist, so verfügen die Abgase, insbesondere bei sehr hohen Treibdampfdrücken noch über erhebliche Wärmemengen, die sich mit einer Anlage nach Anspruch 3 noch besser ausnutzen lassen. Wie aus dem Schaltschema der **Figur 5** ersichtlich, wird hierzu der ersten abgasbeheizten Dampferzeugereinheit **15** im Abgasstrom eine zweite abgasbeheizte Dampferzeugereinheit **24,25,26,27** nachgeschaltet, welche die fühlbare Wärme zwischen den Temperaturniveaus der Hochdruckdampfschiene **22** und einer Verbraucherdampfschiene **23** zur Generierung von Dampf auf dem Druckniveau einer Verbraucherdampfscheine **23** ausnutzt und in diese einspeist. In Aufbau und Funktion unterscheidet sich diese zweite abgasbeheizte Dampferzeugereinheit **24,25,26,27** von der kühlmittelbeheizten Dampferzeugereinheit **6,7,4,8** der **Figur 1** lediglich dadurch, daß der Nutzwärmeübertrager **4** durch einen Abgaswärmetauscher **26** ersetzt wird. Gespeist wird diese zusätzliche Dampferzeugereinheit **24,25,26,27** mittels der Speisepumpe **28**. Als nachgeschaltete, zweite abgasbeheizte Dampferzeugereinheit nach Anspruch 3 kann auch jede andere zweckmäßige Bauform einer abgasbeheizten Dampferzeugereinheit ausgeführt werden.

Bei Anlagen nach Anspruch 4 ist ein als Kondensator ausgebildeter Verbraucher **21** primärseitig an eine Versorgungsdampfschiene angeschlossen und sekundärseitig in ein Wärmenetz oder in einen Wärmespeicher eingebunden. Der dieser Versorgungsdampfschiene **23** zuströmende Dampf wird ganz oder teilweise der Primärseite des Kondensators **21** zugeführt, und gibt seine Kondensationswärme auf einem höheren Temperaturniveau an das Medium der Sekundärseite des Kondensators **21** ab, als es der maximalen Temperatur des Kühlkreislaufs entspricht, dessen Abwärme einen Teil der Kondensationswärme ausmacht. Nachdem eine Kondensation des Heizdampfes bei der vorgegebenen Maximaltemperatur des Wärmenetzes bzw. des Wärmespeichers nur erreicht werden kann, wenn zu jeder Zeit auch der zugehörige Kondensationsdruck sicher erreicht wird, und weil auch bei derartigen Anlagen ein möglichst geringer Treibdampfbedarf vorteilhaft ist, sind für die Erzeugung des Heizdampfes die gleichen Einrichtungen erforderlich wie für die Dampferzeugung zur sicheren Versorgung sonstiger Verbraucher **21** einer Versorgungsdampfschiene **23**. Derartige Anlagen lassen sich besonders vorteilhaft in Kraft-Wärme-Kopplungs-Anlagen mit solchen angegliederten Fernwärmenetzen und Wärmespeicheranlagen einsetzen, deren hohes Temperaturniveau eine rekuperative Einkopplung der Abwärme aus den Kühlkreisläufen von Motoren nicht erlaubt, in denen aber auf die für Verbrennungsmotoren bereits bei kleinen Leistungen charakteristischen Vorteile wie hohe Arbeitsausbeute und gutes Teillastverhalten nicht verzichtet werden soll.

Nachstehend werden einige Ausführungsbeispiele unter Bezugnahme auf die Schaltschemata der **Figuren 1 bis 4** beschrieben. Aufgrund der vielfältigen Ausführungsmöglichkeiten sind diese auf eine Grundvariante mit jeweils einem Motor **1**, einer kühlmittelbeheizten Dampferzeugereinheit **6,7,4,8,** einem Dampfstrahlkompressor **11**, einer ersten abgasbeheizten Dampferzeugereinheit **15**, einer Hochdruckdampfschiene **22**, und einer Verbraucherdampfschiene **23** mit einem Verbraucher **21** beschränkt. Diese zeichnet sich durch eine nach dem Prinzip der Entspannungsverdampfung arbeitenden kühlmittelbeheizten Dampferzeugereinheit **6,7,4,8** aus, wobei die Einkopplung der Abwärme aus einem Kühlkreislauf mittels eines Kühlmittel/Wasser-Nutzwärmetauschers **4** erfolgt, und wobei die Abfuhr der in der Dampferzeugereinheit gegebenenfalls nicht verwertbaren Abwärme mittels eines in den Kühlkreislauf eingebundenen und von einem Regelventil **2** in Abhängigkeit von der Motoraustrittstemperatur geregelten Kühlmittel/Luft-Regelwärmetauscher **3** an die Umgebung erfolgt.

Ausgehend von dieser Grundvariante sind einige Untervarianten näher beschrieben, die sich bezüglich der Vorrichtung **17,18,19,20** zur Regelung des Saugdrucks unterscheiden. Hier sind ausschließlich Ausführungsbeispiele behandelt, deren Vorrichtungen **17,18,19,20** mit Dampf aus der Hochdruckdampfschiene **22** versorgt werden. Die gleichen Vorrichtungen können aber auch mit Dampf aus der Versorgungsdampfschiene **23** arbeiten. Bezogen auf das Schaltschema der **Figur 1** stellt sich der Betrieb im Auslegungspunkt wie folgt dar:

Die Kühlmittelpumpe **5** fordert das im Kühlkreislauf zirkulierende Kühlmittel zum Kühlmitteleintritt des Motors **1**. Im Motor **1** nimmt das Kühlmittel die abzuführende Wärme auf, wobei seine Temperatur entsprechend des Wärmekapazitätsstromes steigt, um anschließend den Nutzwärmetauscher **4** der kühlmittelbeheizten Dampferzeugereinheit **6,7,4,8** zu durchströmen, wo es die im Motor **1** aufgenommene Wärme vollständig abgibt, und sich dabei wieder auf Motoreintrittstemperatur abkühlt. Nachdem im Auslegungspunkt der Anlage die Einhaltung aller vorgegebenen Temperaturen und Drücke gewährleistet ist, hält das dem Nutzwärmetauscher **4** nachgeschaltete Regelventil **2** die Zuleitung zum Regelwärmetauscher **3** gesperrt und leitet den gesamten Kühlmittelstrom direkt der Kühlmittelpumpe **5** zu, welche diesen erneut zum Motoreintritt fördert.

Die kühlmittelbeheizte Dampferzeugereinheit **6,7,4,8** weist einen Druckbehälter **6** auf, der zum Teil mit dem zu verdampfenden Wasser gefüllt ist, und der als Entspannungsgefäß dient. Aus diesem Druckbehälter fließt das zu verdampfende Wasser der Pumpe **7** zu, wird von dieser zur Sekundärseite des Nutzwärmetauschers **4** gefördert, wo es die vom Motorkühlwasser abgegebene Wärme aufnimmt, und wird dann mittels einer Entspannungseinrichtung, z. B. dem Entspannungsventil **8** , dessen Auslaß in den Druckbehälter **6** mündet, entspannt, so daß die Dampfausscheidung auf dem Saugdruckniveau **p**_{**S**} erfolgt, und das Wasser die zuvor aufgenommene Wärme durch direkte Verdampfung einer Teilmenge wieder abgibt, und anschließend erneut der Pumpe **7** zufließt. Dabei wird die verdampfte Wassermenge mittels der Speisepumpe **9** durch Speisewasser ersetzt, und der generierte Dampf über ein Rückschlagventil **10** dem saugseitigen Anschluß des Dampfstrahlkompressors **11** zugeführt.

Der Dampfstrahlkompressor **11** wird durch den maximalen Treibdampfstrom **MTR**_{**max**} auf dem Hochdruckniveau **p**_{**TR**} angetrieben, der aus der Hochdruckdampfschiene **22** über ein Abschaltventil **13** zum Treibdampfstutzen des Dampfstrahlkompressors **11** strömt, verdichtet da maximalen Saugstrom **MS**_{**max**} und liefert den maximalen Gemischstrom **MD**_{**max**} auf dem Versorgungdruckniveau **p**_{**V**} an die Verbraucherdampfschiene **23** ab, der gerade dem Dampfbedarf der Verbraucher **21** entspricht. Hier verkörpert die Hochdruckdampfschiene **22** eine ausreichend ergiebige Dampfquelle, die teilweise oder ausschließlich von der ersten abgasbeheizten Dampferzeugereinheit **15** gespeist wird. Die in der ersten abgasbeheizten Dampferzeugereinheit **15** verdampfte Wassermenge wird dabei mittels der Speisepumpe **16** durch Speisewasser ersetzt.

Gemäß den kennzeichnenden Merkmalen des Anspruchs 1 arbeitet die Anlage bei vom Auslegungspunkt abweichenden Betriebspunkten wie folgt:

Überschreitet die Damspfabnahme des Verbrauchers **21** den maximalen Gemischdampfstrom **MD**_{**max**}**,** so führt dies zu einem Druckabfall in der Verbraucherdampfschiene **23** unter das Druckniveau **p**_{**V**}. Das in Abhängigkeit von diesem Druckabfall arbeitende Regelventil **14** wird von der Hochdruckdampfschiene **22** versorgt und arbeitet als Druckregelventil. Dieser Funktion entsprechend wirkt es der Ursache des Druckabfalls entgegen, indem es dem Gemischdampfstrom soviel Dampf aus der Hochdruckdampfschiene **22** zudosiert, bis die der Verbraucherdampfschiene **23** zuströmende Dampfmenge mit der zu den Verbrauchern **21** abströmenden Dampfmenge im Gleichgewicht ist, und hält somit den Versorgungsdruck **p**_{**V**} oberhalb des zulässigen unteren Grenzwertes.

Unterschreitet die Dampfabnahme der Verbraucher **21** den maximalen Gemischdampfstrom **MD**_{**max**}, so hat das einen Anstieg des Versorgungsdrucks **p**_{**V**} zur Folge, der gleichbedeutend ist mit einem Anstieg des Gegendrucks **p**_{**D**} des Dampfstrahlkompressors **11** , wodurch dieser auf dem abfallenden Ast der Kennlinie betrieben würde. Dies wird verhindert, indem die Regeleinrichtung **12** in Abhängigkeit vom steigenden Versorgungsdruck **p**_{**V**} und unter Einhaltung des zulässigen Höchstwertes für den Versorgungsdruck **p**_{**V**} die Düsennadel des Dampfstrahlkompressors **11** solange zu kleineren Treibdampfmengen hin verstellt, bis die vom Dampfstrahlkompressor gelieferte Gemischdampfmenge mit der Dampfabnahme der Verbraucher **21** im Gleichgewicht ist. Bedingt durch das Kennlinienield des Dampfstrahlkompressors **11** sinkt damit auch der absolute Saugstrom. Bei höherer Wärmezufuhr an die kühlmittelbeheizte Dampferzeugereinheit **6,7,4,8,** als es der Wärmeabfuhr durch den Saugdampfstrom entspricht, steigt das Temperaturniveau in der kühlmittelbeheizten Dampferzeugereinheit **6,7,4,8** und damit auch der Druck **p**_{**V**}, und infolgedessen der relative Saugstrom. Das bedeutet, daß die ansonsten schlecht verwertbare Abwärme des Kühlmittels überproportional zur Deckung der nun geringeren Dampfabnahme der Verbraucher **21** herangezogen wird, während sich der Verbrauch an häufig anderweitig nutzbarem, leichter speicherbarem und unter Umständen durch zusätzlichen Brennstoffeinsatz erzeugtem Dampf aus der Hochdruckdampfschiene **22** reduziert. Dabei kann die Regeleinrichtung **12** z. B. eine elektronische Regeleinrichtung sein, die mittels eines Meßumformers den Versorgungsdruck **p**_{**V**} erfaßt, die Regelabweichung bildet, diese entsprechend eines geeigneten Regelalgorithmus verarbeitet und die Stellgröße an ein mit Hilfsenergie versorgtes, elektrisches oder pneumatisches Stellglied weiterleitet, das die Düsennadel verstellt.

Sinkt die Dampfabnahme noch weiter ab, so steigt das Temperaturniveau in der kühlmittelbeheizten Dampferzeugereinheit **6,7,4,8** noch weiter an, und infolgedessen steigt auch die Motoraustrittstemperatur des Kühlmittels. Erreicht diese einen vorgegebenen Schwellenwert, so gibt das dem Nutzwärmetauscher **4** nachgeschaltete, und hier in Abhängigkeit von der Motoraustrittstemperatur arbeitende Regelventil **2** zur Temperaturbegrenzug die Zuleitung zum Regelwärmetauscher **3** soweit frei, daß dieser die zur Dampferzeugung im Moment nicht nutzbare Wärme unter Einhaltung der zulässigen Temperaturobergrenze für die Motoraustrittstemperatur an die Umgebung abführen kann. Nach dem Austritt aus dem Regelwärmetäuscher **3** vermischt sich der abgekühlte Teilstrom mit dem restlichen Kühlmittelstrom. Der Gesamtkühlmittelstrom erreicht an dieser Stelle die zur Einhaltung der maximal zulässigen Motoraustrirtstemperatur erforderliche Motoreintrittstemperatur und strömt anschließend wieder der Kühlmittelpumpe **5** zu.

Dabei wirkt sich die gewählte Schaltung von Nutz- und Regelwärmeübertrager besonders vorteilhaft aus. Da der Nutzwärmetauscher **4** der kühlmittelbeheizten Dampferzeugereinheit **6,7,4,8** vom gesamten Wärmekapazitätsstrom durchströmt wird, verursacht die Auskopplung der zur Dampferzeugung verwertbaren Teilwärme die kleinstmögliche Auskühlung des Kühlmittelstroms. Demzufolge kann die Einkopplung dieser Teilwärme in die kühlmittelbeheizten Dampferzeugereinheit **6,7,4,8** auf dem höchstmöglichen Temperaturniveau erfolgen, was höchstmöglichen Saugdruck, höchstmöglichen relativen Saugstrom und somit geringstmöglichen Treibdampfbedarf zur Folge hat.

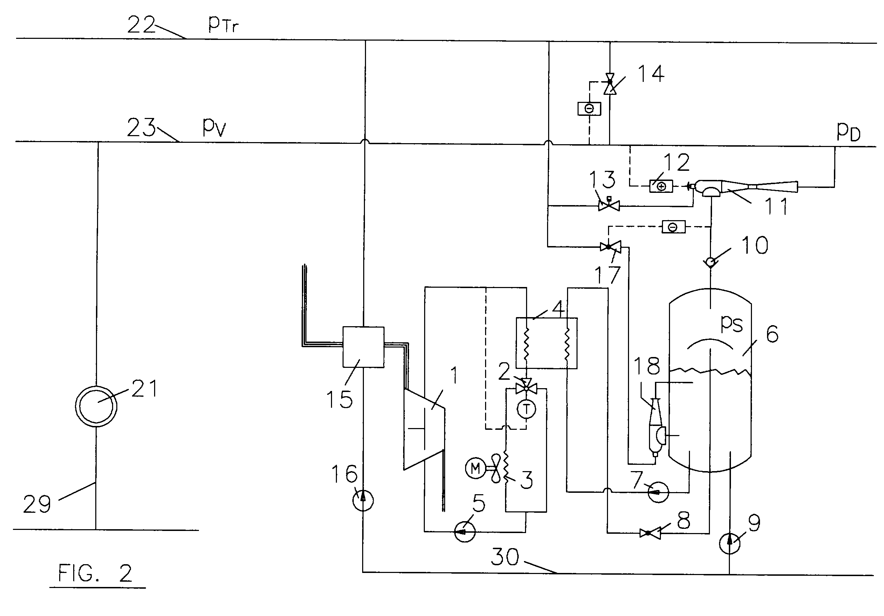

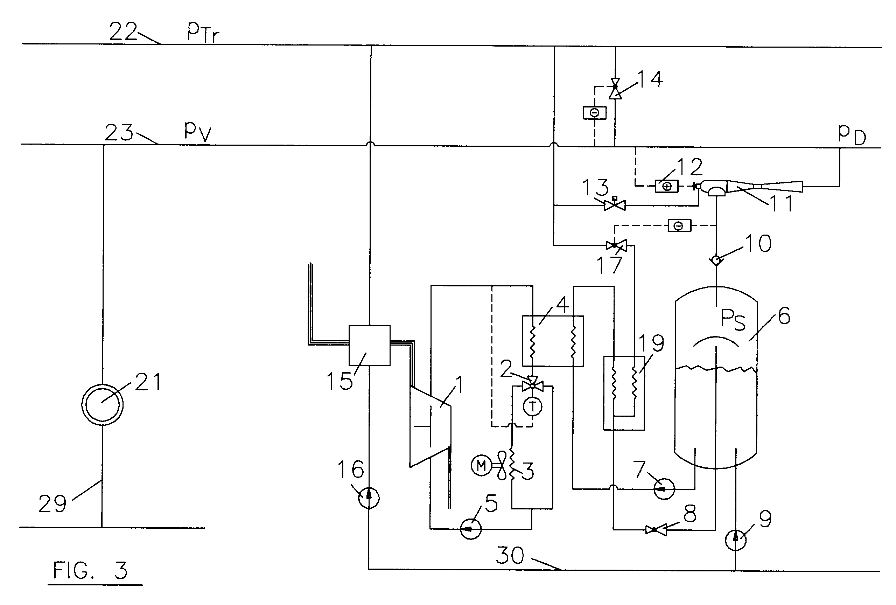

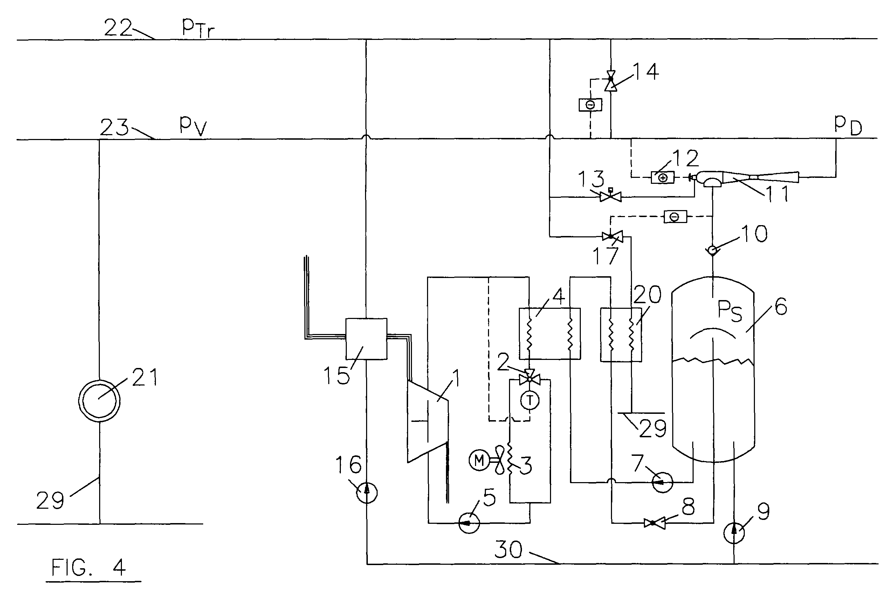

Wird der Motor **1** unter Teillast betrieben und reicht die im Motorkühlmittel anfallende Wärme nicht aus, der kühlmittelbeheizten Dampferzeugereinheit **6,7,4,8** in dem Maße Wärme zuzuführen, wie es dem vom Dampfstrahlkompressor **11** bei entsprechend hoher Damspfabnahme der Verbraucher **21** angesaugten Saugdampfstrom entspricht, so fällt das Temperaturniveau und damit auch der Saugdruck **p**_{**S**} in der Dampferzeugereinheit **6,7,4,8**. Das hätte zur Folge, daß der Dampfstrahlkompressor **11** den durch das Regelvatil **14** konstant gehaltenen, und zur zuverlässigen Versorgung der Verbraucher **21** erforderlichen Versorgungsdruck **p**_{**V**} auf dem waagrechten Ast der Kennlinie nicht mehr erreichen könnte, wodurch dieser in unwirtschaftlicher und vielfach problematischer Weise auf dem abfallenden Ast seiner Kennlinie betrieben werden müßte. Das wird im einfachsten Fall durch ein Regelventil **17** verhindert, das entsprechend dem Schaltschema der **Figur 1** als Druckregelventil arbeitet, und so in Abhängigkeit des fallenden Saugdrucks **p**_{**S**} soviel Dampf aus der Hochdruckdampfschiene **22** in die Saugleitung des Dampfstrahlkompressors **11** zudosiert, daß dieser Dampf zusammen mit demjenigem aus der kühlmittelbeheizten Dampferzeugereinheit **6,7,4,8** mit dem vom Dampfstrahlkompressor **11** angesaugten Saugdampfstrom im Gleichgewicht ist, und so dem Druckabfall entgegenwirkt. Die gleiche Wirkung läßt sich erzielen, indem das Regelventil **17** nicht unmittelbar Dampf aus der Hochdruckdampfschiene **22** in die Saugleitung des Dampfstrahlkompressors **11** zudosiert, sondern wie im Schaltschema der **Figur 2** dargestellt, in Verbindung mit einem an den Druckbehälter **6** montierten, selbstansaugenden Dampfstrahlerhitzer **18**, oder wie im Schaltschema der **Figur 3** dargestellt, in Verbindung mit einem nach dem Nutzwärmetauscher **4** in die Zirkulationsleitung der kühlmittelbeheizten Dampferzeugereinheit **6,7,4,8** eingeschalteten Dampfstrahlerhitzer mit Wasserzufuhr **19**, oder wie im Schaltschema der **Figur 4** dargestellt, in Verbindung mit einem an Stelle des Dampfstrahlerhitzers mit Wasserzufuhr eingeschalteten, dampfbeheizten Wärmeübertrager **20**, oder durch Einleitung von Dampf mit anschließender direkter Kondensation des zugeführten Dampfes im Wasseraum der kühlmittelbeheizten Dampferzeugereinheit **6,7,4,8,** zusätzlich Wärme in dem Maße zuführt, wie es zur Einhaltung des kleinsten zulässigen Wertes für den Saugdruck **p**_{**S**} erforderlich ist.

Die unter Bezugnahme auf die Schaltschemata der **Figuren 1 bis 5** abgefaßte Beschreibung enthält sämtliche, für die Ausführung von Anlagen nach den Ansprüchen 1 bis 4 erforderlichen Informationen.

### Bezugszeichenliste

- 1: Verbrennungsmotor, flüssigkeitsgekühlt
- 2: Regeleinrichtung (zur Begrenzung der Temperatur des Kühlmittels), z.B. Regelventil
- 3: Vorrichtung (zur Begrenzung der Temperatur des Kühlmittels),
z. B. Regelwärmetsuscher
- 4: Nutzwärmübertrager (der kühlmittelbeheizten Dampferzeugereinheit),
z. B. Kühlmittel/Wasser-Wärmetauscher
- 5: Kühlmittelpumpe
- 6: Druckbehälter (der kühlmittelbeheizten Dampferzeugereinheit)
- 7: Pumpe (der kühlmitelbeheizten Dampferzeugereinheit)
- 8: Entspannungseinrichtung (der kühlmittelbeheizten Dampferzeugereinheit), z.B. Ventil
- 9: Speisepumpe
- 10: Rückschlagventil
- 11: Dampfstrahlkompressor mit Düsennadelverstellung
- 12: Regeleinrichtung zur Verstellung der Düsennadel
- 13: Abschaltventil
- 14: Regelventil
- 15: Erste abgasbeheizte Dampferzeugereinheit
- 16: Speisepumpe
- 17: Regelventil
- 18: Dampfstrahlerhitzer, selbstansaugend
- 19: Dampfstrahlerhitzer mit Wasserzufuhr
- 20: Dampfbeheizter Wärmeübertrager
- 21: Verbraucher
- 22: Hochdruckdampfschiene
- 23: Verbraucherdampfschiene
- 24: Druckbehälter (der zweiten abgasbeheizten Dampferzeugereinheit)
- 25: Pumpe (der zweiten abgasbeheizten Dampferzeugereinheit)
- 26: Abgaswärmetauscher (der zweiten abgasbeheizten Dampferzeugereinheit)
- 27: Entspannungsventil (der zweiten abgasbeheizten Dampferzeugereinheit)
- 28: Speisepumpe
- 29: Kondensatsystem
- 30: Speisewasserzuleitung

## Patentansprüche

1. Anlage zur kombinierten Erzeugung von mechanischer Antriebsenergie und Dampf, mit
- wenigstens einem flüssigkeitsgekühlten Verbrennungsmotor **(1)** zur Erzeugung der mechanischen Antriebsenergie, der wenigstens einen Kühlkreislauf aufweist,
- wenigstens einer kühlmittelbeheizten Dampferzeugereinheit **(6,7,4,8)** zur Erzeugung von Dampf unter Ausnutzung der Abwärme von wenigstens einem der Kühlkreisläufe des wenigstens einen Verbrennungsmotors **(1)**,
- wenigstens einem, mit Dampf aus einer Hochdruckdampfischiene **(22)** angetriebenen Dampfstrahlkompressor **(11)**, der saugseitig mit einer der kühlmittelbeheizten Dampferzeugereinheiten **(6,7,4,8)** verbunden ist, den aus dieser Dampferzeugereinheit **(6,7,4,8)** angesaugten Dampf verdichtet und gegendruckseitig in eine Verbraucherdampfschiene **(23)** einspeist, die zur Versorgung eines oder mehrerer Verbraucher **(21)** auf einem Druckniveau dient, das höher liegt, als der Dampfdruck bei maximaler Kühlmitteltemperatur des jeweiligen Kühlkreislaufs,
- wenigstens einer ersten abgasbeheizten Dampferzeugereinheit **(15)** zur Erzeugung von Dampf für wenigstens eine der Dampfschienen **(22** oder **23)** unter Ausnutzung der Abwärme aus den Motorabgasen von wenigstens einem der Verbrennungsmotoren **(1)**
**dadurch gekennzeichnet,**
- daß der wenigstens eine Dampfstrahlkompressor **(11)** mittels einer verstellbaren Düsennadel regelbar ist, und
- daß die Anlage Einrichtungen zur Regelung für einen vom Auslegungspunkt abweichenden, stabilen Betrieb bei optimalem Wirkungsgrad mit folgenden Komponenten aufweist:
- wenigstens ein Regelventil **(14)**, das zwischen die jeweilige Verbraucherdampfschiene **(23)** und eine Dampfschiene höheren Drucks **(22** oder **23)** geschaltet ist
- eine, dem wenigstens einen Dampfstrahlkompressor **(11)** zugeordnete Regeleinrichtung **(12)** zur Verstellung der Düsennadel des Dampfstrahlkompressors **(11)** in Abhängigkeit vom Gegendruck in der zugehörigen Verbraucherdampfschiene **(23)**
- eine Vorrichtung **(2,3)** zur Begrenzung der Temperatur des wenigstens einen Kühlkreislaufs auf einen vorgegebenen Wert, die wenigstens eine, zwischen Motor **(1)** und Saugseite des wenigstens einen zugehörigen Dampfstrahlkompressors **(11)** eingebundene Vorrichtung **(3)** zur Abfuhr überschüssiger Abwärme aus dem Motorkühlkreislauf und wenigstens eine zugehörige Regeleinrichtung **(2)** aufweist
- wenigstens eine Regelvorrichtung zur Regelung des Saugdrucks auf der Saugseite des jeweiligen Dampfstrahlkompressors **(11)**, die wenigstens ein Regelventil **(17)** aufweist, das zwischen eine Dampfschiene höheren Drucks **(22** oder **23)** und den saugseitigen Anschluß des Dampfstrahlkompressors **(11)** geschaltet ist, oder die wenigstens eine Einrichtung zur zusätzlichen, vom Wärmeanfall im Kühlmittel des jeweiligen Kühlkreislaufs unabhängigen Beheizung der wenigstens einen kühlmittelbeheizten Dampferzeugereinheit **(6,7,4,8)** aufweist.

2. Anlage nach Anspruch 1, dadurch gekennzeichnet, daß der oder die Verbrennungsmotor: **(1)** heißgekühlte Motoren sind.

3. Anlage nach einem der vorangegangenen Ansprüche , dadurch gekennzeichnet, daß die Anlage wenigstens eine, einer ersten abgasbeheizten Dampferzeugereinheit **(15)** im Abgasstrom nachgeschaltete, zweite abgasbeheizte Dampferzeugereinheit **(24,25,26,27)** aufweist, welche Sattdampf auf einem niedrigeren Druckniveau als die vorgeschaltete, erste abgasbeheizte Dampferzeugereinheit **(15)** erzeugt.

4. Anlage nach einem der vorangegangenen Ansprüche, dadurch gekennzeichnet, daß wenigstens ein, einer Versorgungsdampfschiene **(23)** zugeordneten Verbraucher **(21)** als Kondensator zur Einkopplung der Kondensationswärme einer vorgegebenen Dampfmenge aus der betreffenden Versorgungsdampfschiene **(23)** in ein Wärmenetz oder in einen Wärmespeicher ausgebildet ist.
